# EUROPÄISCHE PATENTANMELDUNG

(11) **EP 0 650 659 A1**
(43) Veröffentlichungstag der Anmeldung: **03.05.1995**
(21) Anmeldenummer: 93119869.1
(22) Anmeldetag: 09.12.1993
(51) Int. Cl.: A01B 29/04, A01B 29/06, A01B 29/02

(54) **Stütz- und Rückverfestigungseinrichtung**

(30) Priorität: 20.10.1993 DE 4335734
(71) Anmelder: Schäfer, Wilhelm Josef, D-52396 Heimbach (DE)
(72) Erfinder: Schäfer, Wilhelm Josef, D-52396 Heimbach (DE)
(74) Vertreter: Mayer-Pohske, Joachim-Wolfgang

(57) **Zusammenfassung**

Bei der Erfindung geht es um eine Stütz- und Rückverfestigungseinrichtung für eine Anordnung an Bodenbearbeitungsgeräten, mit einer in einem Aufnahmegestell drehbar gelagerten Walze (1). Eine solche Einrichtung soll geeignet sein, den Boden gleichmäßig rückzuverfestigen und ein Verkleben von Erdklumpen zu vermeiden. Gleichzeitig sollen Saatgutrillen erzeugt werden. Dies wird dadurch erreicht, daß auf der Walze (1) in axialer Richtung in einem gewünschten Abstand zueinander Stege (3) bildende Ringe (4) angeordnet sind, über deren äußere Kuppen ein flexibles Band (5), das im unbelasteten Zustand einen Hüllzylinder (6) bildet, gelegt ist.

## Beschreibung

Die Erfindung betrifft eine Stütz- und Rückverfestigungseinrichtung für eine Anordnung an Bodenbearbeitungsgeräten, mit einer in einem Aufnahmegestell drehbar gelagerten Walze.

Einrichtungen der genannten Art sind in der Landwirtschaft weit verbreitet und bekannt. Sie sind an Bodenbearbeitungsgeräten, wie z. B. Eggen angebaut und dienen einerseits dazu, die Höhenlage bzw. Eindringtiefe solcher Eggen festzulegen und den von der Egge bzw. allgemein dem vorangehenden Bodenbearbeitungsgerät bearbeiteten Boden rückzuverfestigen.

Solche bekannten Walzen haben jedoch den Nachteil, daß sie verkleben oder je nach Bauart der Walze den Boden ungleichmäßig verfestigen. Hierdurch wird das gewünschte Arbeitsergebnis nicht erreicht und außerdem wird hierdurch vielfach ein erhöhter Traktionsbedarf erzeugt, wodurch die Schlepperbelastung unerwünscht steigt.

Eine ganz ähnliche Einrichtung ist auch mit der europäischen Veröffentlichung Nr. 0 257 711 A1 bekannt geworden. Bei dieser Einrichtung wird ein Walzenpaar mit parallel zueinander angeordneten Drehachsen umfaßt von Stege und Kettenglieder aufweisenden Ketten, die radial über die Walzen hinausragen und über Bolzen im Abstand zueinander gehalten werden. Solche Einrichtungen sind nicht in der Lage, eine Rückverfestigung des Bodens vorzunehmen. Vielmehr erfolgt durch diese Einrichtungen eine Nachzerkrümelung des Bodens als Folgebarbeitung einer vorangegangenen Bodenbearbeitung. Gleiches gilt auch für eine weitere, durch die DE-OS 31 49 051 bekannt gewordene ähnliche Einrichtung. Auch hier erfolgt eine Bodennachzerkrümelung und nicht etwa eine Rückverfestigung.

Da nach erfolgter Rückverfestigung häufig Saatgut eingebracht werden soll, wäre es erstrebenswert, wenn der rückverfestigte Boden gleichzeitig schon markierte Rillen für die Saatgutablage aufweisen würde. Keine der bekannten Einrichtungen ist in der Lage, solche Markierungen vorzunehmen.

Ausgehend von diesem Stand der Technik liegt der Erfindung die Aufgabe zugrunde, eine Stütz- und Rückverfestigungseinrichtung der eingangs beschriebenen Art vorzuschlagen, die den Boden gleichmäßig verfestigt, bei der die Walze nicht mehr verliebt und die gleichzeitig bereits Saatgutrillen erzeugt.

Erfindungsgemäß wird diese Aufgabe dadurch gelöst, daß auf der Walze in axialer Richtung in einem gewünschten Abstand zueinander Stege bildende Ringe angeordnet sind, über deren äußere Kuppen ein flexibles Band, das im unbelasteten Zustand einen Hüllzylinder bildet, gelegt ist. Der Hüllzylinder bildet nun eine durchgehende glatte Fläche, die jedoch, da sie als flexibles Band ausgebildet ist, flexibel ist. Sie erstreckt sich über die ganze Walzenbreite, so daß die äußere Oberfläche dieses flexiblen Bandes mit dem Boden in Kontakt kommt, so daß aufgrund der geschlossenen Fläche einerseits eine einwandfreie Abstützwirkung und andererseits eine einwandfreie gleichmäßige Rückverfestigung stattfindet. Die insbesondere bei feuchtem oder nassem Akerboden am Band haftenden Bodenteile werden durch die am Boden sich aufgrund der Flexibilität permanent verformende Oberfläche des Bandes wieder von diesem gelöst und fallen ab. Ein Verlieben ist nicht mehr möglich. Da dieses flexible Band aber nicht auf seiner gesamten Innenseite unterstützt ist sondern nur im Bereich der Stegkuppen der auf der Walze im Abstand zueinander angeordneten Ringe eine Abstützung findet, wird in diesem Bereich das flexible Band zwischen den Ringen in den freien Abständen etwas eingedrückt, so daß in Folge dessen die Kuppen der Ringe am verfestigten Boden je eine Rille für das Saatgut erzeugen.

Nach einer Ausgestaltung der Erfindung ist vorgesehen, daß an beiden Stirnseiten des Hüllzylinders ein radial nach innen ragender, unverformbarer Ring vorgesehen ist, um ein axiales Wandern des den Hüllzylinder bildenden flexiblen Bandes zu verhindern. Dies ist einerseits eine einfache und andererseits eine sichere Methode, daß flexible Band in richtiger Arbeitsposition zu halten.

Nach einer weiteren Ausgestaltung der Erfindung ist vorgesehen, daß der unverformbare Ring eine etwa zylindrische Außenfläche aufweist und mit dieser gegen die Innenfläche des Hüllzylinders gelegt ist, wobei der Ring am Hüllzylinder befestigt ist. Diese Ausbildung erlaubt eine einfache und in axialer Richtung platzsparende Anordnung und Befestigung. Die Befestigung des unverformbaren Ringes kann jedoch in Ergänzung zur Befestigung am Hüllzylinder zusätzlich noch an der Walze selbst erfolgen, so daß gleichzeitig eine in der Regel jedoch unschädliche mögliche Radialbewegung des unverformbaren Ringes zuverlässig verhindert wird.

Eine ergänzende Ausgestaltung der Erfindung sieht vor, daß die Befestigung eine Verschraubung oder Verklebung ist. Dies sind, wenn auch nicht die einzigen, so doch bevorzugte Befestigungsformen. Sie sind gegenüber einer z. B. Einvulkanisierung einfacher herstellbar.

Ergänzend ist nach der Erfindung noch vorgeschlagen, daß das flexible Band ein Gummiband mit oder ohne Verstärkungseinlagen ist. Solche Gummibänder, insbesondere wenn sie Verstärkungseinlagen aufweisen, können außerordentlich verschleißfest hergestellt werden, wie die Gurte von Bandförderern für schweres Stückgut zeigen.

Es ist weiter nach der Erfindung vorgesehen, daß die die Stege bildenden Ringe aus einem festen Kunststoff oder einem festen Gummi bestehen. Dies erlaubt es, die Ringe in solchen Abmessungen herzustellen, daß sie nach einer entsprechenden vorherigen Dehnung des Innendurchmessers über geeignete Vorrichtungen über die Walze gezogen und sodann dort aufgesetzt werden, wo sie sich selbst anpressen und ohne weitere Befestigungsmittel festhalten. Dies ist jedoch nur eine vorteilhafte Ausbildung. Es ist auch möglich z. B. einen kompletten Kunststoffhohlzylinder anzufertigen, in dessen Innendurchmesser die Walze eingesetzt wird und der auf seinem Außendurchmesser bereits die die Stege bildenden Ringe in einstückiger Ausbildung aufweist. Es muß dann nur dieser Kunststoffhohlzylinder an der inneren Walze befestigt werden. Eine solche Ausbildung ist jedoch teurer, erfüllt aber den angestrebten Zweck.

Schließlich ist nach der Erfindung noch vorgeschlagen, daß die die Stege bildenden Ringe radial nach außen spitz zulaufen. Hierdurch werden die breiten Abmessungen der erzeugten Saatgutrillen in gewünschter Weise beeinflußt.

Die Erfindung soll nun anhand der beigefügten Zeichnungen näher erläutert werden. Es zeigen:
- Figur 1: Draufsicht auf eine erfindungsgem. Einrichtung mit vorangeschalteter Kreiselegge und angedeuteter Anhängevorrichtung
- Figur 2: Seitenansicht der Einrichtung nach Fig. 1 in Arbeitsstellung
- Figur 3: Aufbauprinzip und Arbeitsprinzip der Walze in Draufsicht in abgebrochener Darstellung

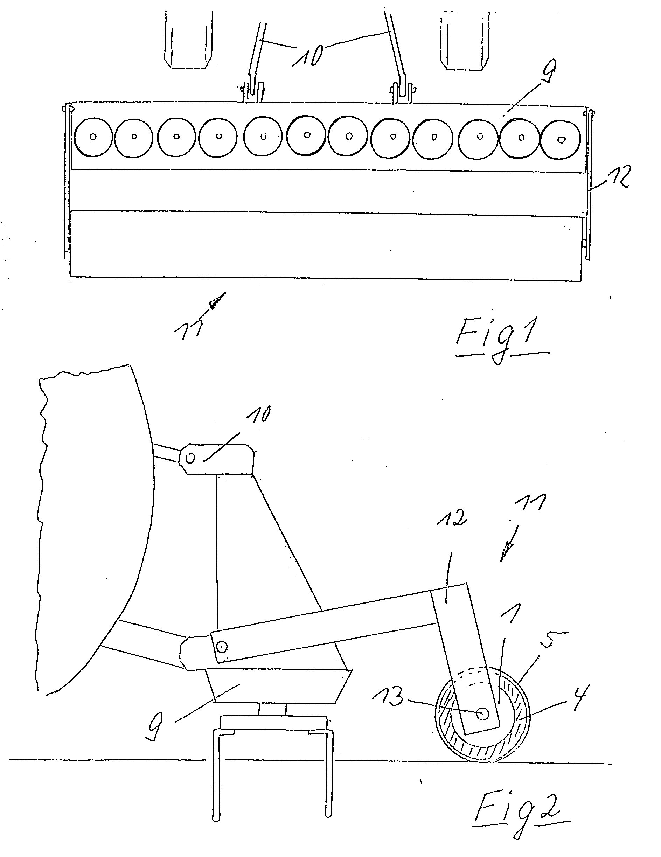

Die Fig. 1 und 2 zeigen die erfindungsgem. Einrichtung in typischer Arbeitsstellung. Eine bekannte Kreiselegge 9 ist über eine übliche Anhängeeinrichtung 10 an einen nur angedeuteten Schlepper angehängt und wird von diesem in bekannter Weise drehend angetrieben. Der Kreiselegge 9 nachgeordnet ist eine Stütz- und Rückverfestigungseinrichtung 11, bei der von einem ansich bekannten Traggerüst 12 eine Walze 1 drehbar getragen wird. Diese Walze 1 kann in üblicher und bekannter Weise über eine Achse 13 im Traggerüst 12 drehbar gelagert und gehalten sein. Die Walze 1 kann hierbei als Vollzylinder oder als Hohlzylinder ausgebildet sein. Auf der glatten Außenfläche der Walze 1 sind in einem Abstand 2 zueinander, der eine gewünschte oder wählbare Größe aufweist, Stege 3 bildende Ringe 4 angeordnet. Der Ausdruck "Stege bildend" bedeutet hier, daß die Ringe 4 nicht sehr flach sind, sondern eine deutliche radiale Ausdehnung aufweisen, so daß diese radiale Ausdehnung einen Steg auf der Oberfläche der Walze 1 bildet. Diese Ringe 4 können aus einem festen Gummi oder einem festen Kunststoff gebildet sein, mit einem Innendurchmesser, der etwas kleiner ist als der Außendurchmesser der Walze 1. Sie können sodann in diesem Innendurchmesser soweit gedehnt werden, daß sie über die Außenfläche der Walze 1 geschoben werden können, bis in eine gewünschte Position. Die Dehnvorrichtung kann sodann entfernt werden, so daß die Ringe 4 sich aufgrund ihrer Elastizität zusammenziehen und sich damit fest gegen die Oberfläche der Walze 1 drücken und dort halten.

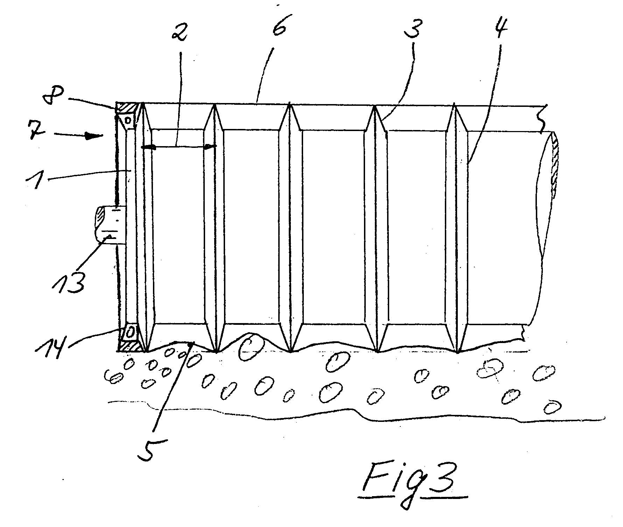

Im Ausfürhungsbeispiel nach Fig. 3 laufen die die Stege 3 bildenden Ringe 4 radial nach außen spitz zu, wie in der Darstellung nach Fig. 3 zu sehen ist. Über die radial außen liegenden Spitzen der Ringe 4 ist nun rundum ein in unbelastetem Zustand einen Hüllzylinder 6 bildendes flexibles Band 5 gelegt, das sich axial über die ganze Breite der Walze 1 und falls gewünscht, auch darüber hinaus erstreckt. Dieses flexible Band kann z. B. aus Gummi mit oder ohne verstärkende Einlagen gebildet sein. Es kann sich hierbei um ein solches Material handeln, wie es z. B. bei Gurtförderern im Schwerlastbetrieb zur Herstellung der Gurte verwendet wird. Verwendbar ist aber auch jedes andere flexible und genügend verschleißrestistente Material.

Um auf einfache Art und Weise zu verhindern, daß während des Betriebes das flexible Band in seitliche Richtung seine Lage verändert und möglicherweise abläuft, ist an beiden Stirnseiten 7 des flexiblen Bandes 5 in einem überstehenden Bereich ein nicht verformbarer Ring 8, z. B. als Stahlring ausgebildet, vorgesehen und an der Innenseite des flexiblen Bandes 5 beispielsweise durch Verschraubung oder Verliebung befestigt. Aufgrund der radial nach innen gerichteten Ausdehnung des unverformbaren Ringes 8 verhindert dieser mit Sicherheit eine axiale Wanderung des flexiblen Bandes 5, weil in einem solchen Fall der Ring 8 an dem ersten einen Steg 3 bildenden Ring 4 zur Anlage käme und damit nicht mehr axial weiter bewegbar ist. Ansich ist eine zusätzliche Befestigung des Ringes 8 am Zylinder 1 nicht erforderlich, jedoch möglich. Dies ist in Fig. 3 angedeutet. Dort ist der Ring 8 über Radialstege 14 mit der Walze 1 verbunden, so daß eine Radialbewegung des Ringes 8 ebenfalls unterbunden ist. Das flexible Band 5 ist damit sicher in seiner richtigen Position gehalten.

Wird die solcherart ausgebildete und von dem flexiblen Band 5 umhüllte Walze 1 auf einem in geeigneter Weise vorbearbeiteten Boden aufgesetzt, so wird dieser Boden von dem flexiblen Band 5 rückverfestigt, wobei sich wie in Fig. 3 dargestellt, dieses flexible Band 5 aufgrund des Bodendruckes zwischen den die Stege 3 bildenden Ringen 4 aufgrund seiner Flexibilität eindrückt, so daß in ebenfalls gewünschter Weise nicht nur die Bodenverfestigung erreicht sondern auch deutlich markierte Saatrillen erzeugt werden.

### Liste der verwendeten Bezugszeichen

- 1: Walze
- 2: Abstand
- 3: Stege
- 4: Ringe
- 5: flexibles Band
- 6: Hüllzylinder
- 7: Stirnseite
- 8: Ring
- 9: Kreiselegge
- 10: Anhängereinrichtung
- 11: Stütz- und Rückverfestigungseinrichtung
- 12: Traggerüst
- 13: Achse
- 14: Radialsteg

## Patentansprüche

1. Stütz- und Rückverfestigungseinrichtung für eine Anordnung an Bodenbearbeitungsgeräten mit einer in einem Aufnahmegestell drehbar gelagerten Walze, dadurch gekennzeichnet, daß auf der Walze (1) in axialer Richtung in einem gewünschten Abstand (2) zueinander Stege (3) bildende Ringe (4) angeordnet sind, über deren äußere Kuppen ein flexibles Band (5), das im unbelasteten Zustand einen Hüllzylinder (6) bildet, gelegt ist.

2. Einrichtung nach Anspruch 1, dadurch gekennzeichnet, daß an beiden Stirnseiten (7) des Hüllzylinders (6) ein radial nach innen ragender, unverformbarer Ring (8) vorgesehen ist, um ein axiales Wandern des den Hüllzylinder (6) bildenden flexiblen Bandes (5) zu verhindern.

3. Einrichtung nach Anspruch 2, dadurch gekennzeichnet, daß der unverformbare Ring (8) eine etwa zylindrische Außenfläche aufweist und mit dieser gegen die Innenfläche des Hüllzylinders (6) gelegt ist, wobei der Ring (8) am Hüllzylinder (6) befestigt ist.

4. Einrichtung nach Anspruch 3, dadurch gekennzeichnet, daß die Befestigung eine Verschraubung oder Verklebung ist.

5. Einrichtung nach einem der Ansprüche 1 bis 4, dadurch gekennzeichnet, daß das flexible Band (5) ein Gummiband mit oder ohne Verstärkungseinlagen ist.

6. Einrichtung nach einem der Ansprüche 1 bis 5, dadurch gekennzeichnet, daß die die Stege (3) bildenden Ringe (4) aus einem festen Kunststoff oder einem festen Gummi bestehen.

7. Einrichtung nach einem der Ansprüche 1 bis 6, dadurch gekennzeichnet, daß die die Stege (3) bildenden Ringe (4) radial nach außen spitz zulaufen.
